# EUROPÄISCHE PATENTSCHRIFT

(11) **EP 2 900 388 B1**
(45) Veröffentlichungstag und Bekanntmachung des Hinweises auf die Patenterteilung: **25.05.2016**
(21) Anmeldenummer: 13737578.8
(22) Anmeldetag: 08.07.2013
(51) Int. Cl.: B05C 5/02, H01M 4/04

(54) **SCHALTBARES SCHLITZVENTIL FÜR EINE BESCHICHTUNGSANLAGE, BESCHICHTUNGSANLAGE UND BESCHICHTUNGSVERFAHREN**
SWITCHABLE SLOT VALVE FOR A COATING SYSTEM, COATING SYSTEM AND COATING METHOD
VALVE À FENTE CONNECTABLE POUR INSTALLATION D'APPLICATION DE REVÊTEMENT, INSTALLATION D'APPLICATION DE REVÊTEMENT ET PROCÉDÉ D'APPLICATION DE REVÊTEMENT

(30) Priorität: 27.09.2012 DE 102012217683
(43) Veröffentlichungstag der Anmeldung: 05.08.2015
(73) Patentinhaber: VOLKSWAGEN VARTA Microbattery Forschungsgesellschaft mbH & Co. KG, 73479 Ellwangen Jagst (DE)
(72) Erfinder: HUTH, Andreas, 73479 Ellwangen (DE); SEKLER, Robert, 73479 Ellwangen (DE)
(74) Vertreter: Patentanwaltskanzlei Cartagena
(86) Internationale Anmeldenummer: PCT/EP2013/064389
(87) Internationale Veröffentlichungsnummer: WO 2014/048598

(56) Entgegenhaltungen:
- DE-A1- 2 346 825
- DE-A1-102010 017 965
- US-A- 4 756 271
- US-A1- 2004 261 696

## Beschreibung

### Anwendungsgebiet und Stand der Technik

Die Erfindung betrifft ein schaltbares Auslassventil für eine Beschichtungsanlage zur Steuerung der Abgabe eines pastösen Beschichtungsmaterials. Die Erfindung betrifft darüber hinaus auch eine Beschichtungsanlage mit einem schaltbaren Schlitzventil sowie ein Verfahren zum Beschichten von Oberflächen.

Aus dem Stand der Technik sind gattungsgemäße schaltbare Schlitzventile für Beschichtungsanlagen bekannt., wie z.B. ins US20040261696 oder US6174372. Derartige Ventile weisen in einem Ventilgrundkörper eine in einer Ventilerstreckungsrichtung ausgerichtete Ventilbohrung auf, in die ein Zufuhrkanal einmündet und aus der ein Düsenkanal zur Verbindung mit einer Schlitzdüse der Beschichtungsanlage herausführt. In der Ventilbohrung eines bekannten Schlitzventils ist eine Ventilsteuerstange angeordnet, die um eine in Ventilerstreckungsrichtung erstreckte Drehachse drehbar in der Ventilbohrung gelagert ist und die von einem Ventilkanal durchsetzt ist, der über einen sich axial entlang einer Außenseite der Ventilsteuerstange erstreckten Kanaleinlass und einen ebensolchen gegenüberliegenden Kanalauslass verfügt, die über einen die Ventilsteuerstange durchsetzten Ventilkanal miteinander verbunden sind.

Dabei kann bei diesen bekannten Schlitzventilen die Ventilsteuerstange zwischen einer Durchlassstellung und einer Schlitzstellung durch einen Motor gedreht werden. In der Durchlassstellung ist die Ventilsteuerstange derart angeordnet, dass das durch den Zufuhrkanal zugeführte Beschichtungsmaterial durch den Kanaleinlass in den Ventilkanal gelangen kann und von dort durch den Kanalauslass in den Düsenkanal, von wo es bestimmungsgemäß der Schlitzdüse der Beschichtungsanlage zugeführt wird. In der Schließstellung ist dagegen der Düsenkanal vom Zufuhrkanal durch die Ventilsteuerstange isoliert, so dass die Ausbringung von Beschichtungsmaterial unterbrochen ist.

An der Ventilsteuerstange sind im Bereich zweier Außenumfangsteilflächen zwischen dem schlitzförmigen Kanaleinlass und dem schlitzförmigen Kanalauslass Lagerflächen vorgesehen, die zum Zwecke der Lagerung der Ventilsteuerstange an der Umfangsfläche der Ventilbohrung anliegen. Da die Ventilsteuerstange drehbar ist, verbleibt zwischen diesen Lagerflächen und der inneren Umfangsfläche der Ventilbohrung im Anlagebereich ein Lagerspalt von maximal 100 µm.

Gattungsgemäße Schlitzventile dienen der gezielten Steuerung des Austrags des Beschichtungsmaterials durch eine Schlitzdüse. Sie sind zu diesem Zweck der Schlitzdüse vorgeschaltet und gestatten es, durch Drehung der Ventilsteuerstange die Zufuhr des Beschichtungsmaterials zur Schlitzdüse zeitweise zu unterbrechen. Dies wird insbesondere genutzt, um alternierend Beschichtungsmaterial durch die Schlitzdüse hindurch abzugeben und die Abgabe zu unterbrechen.

Gattungsgemäße Beschichtungsanlagen mit gattungsgemäßen Schlitzventilen finden insbesondere zur Herstellung von Batterien Verwendung. Sie dienen in diesem Kontext dem Ausbringen eines pastösen Beschichtungsmaterials, das insbesondere elektrochemisch aktive Partikel enthält wie beispielsweise Graphitpartikel, in Form einer dünnen Schicht. Insbesondere kann diese Schicht als Elektrodenschicht unmittelbar auf einem geeigneten Kollektor der Batterie aufgebracht werden. Unter einer Beschichtung im Sinne der Erfindung wird jedoch auch die temporäre Aufbringung auf einem Trägersubstrat wie beispielsweise einer Walze oder einem flächigen Trägersubstrat verstanden, von dem aus bestimmungsgemäß die aus dem Beschichtungsmaterial gebildete Schicht in späteren Produktionsschritten wieder abgenommen wird, beispielsweise zur dann vorgesehenen Aufbringung auf ein Kollektorband.

Neben der Ausbringung eines Beschichtungsmaterials mit elektrochemisch wirkenden Partikeln zur Herstellung einer Batterie können derartige Beschichtungsanlagen auch Verwendung finden, um hierdurch eine elektrokatalytische Schicht einer Brennstoffzelle herzustellen. In diesem Fall können insbesondere Beschichtungsmaterialien verarbeitet werden, die als elektrochemisch aktive Partikel Katalysatorpartikel (Edelmetalle, Raney-Nickel, Wolframcarbid, Molybdänsulfide, Wolframsulfide oder ähnliche geeignete Materialien) enthalten, die die kalte Verbrennung von Brennstoffen wie Wasserstoff oder Methanol katalysieren können.

Bei gattungsgemäßen Beschichtungsanlagen ist der Schlitzdüse üblicherweise ein Pastenreservoir vorgeschaltet, aus dem das Beschichtungsmaterial dem Schlitzventil und der nachgeschalteten Schlitzdüse zugeführt wird. Dabei sind sowohl Gestaltungen denkbar, bei denen das Pastenreservoir selbst druckbeaufschlagt ist, um das Beschichtungsmaterial in Richtung des Schlitzventils zu drücken, als auch solche Gestaltungen, bei denen ein separates motorisch betriebenes Fördermittel wie beispielsweise eine Pumpe zwischen Pastenreservoir und Schlitzventil geschaltet ist.

Als Schlitzventil im Sinne der Erfindung wird ein Ventil verstanden, bei dem der Zufuhrkanal, der Düsenkanal sowie der die Ventilsteuerstange durchsetzende Ventilkanal in einer Dimension quer zur Förderrichtung eine deutlich größere Erstreckung als in der hierzu orthogonalen und ebenfalls quer zur Förderrichtung erstreckten Dimension. Die Erstreckung der jeweiligen Kanäle in Ventilerstreckungsrichtung ist gemäß der Definition eines Schlitzventils gemäß dieser Erfindung zumindest um Faktor 4 größer als die Erstreckung quer zur Ventilerstreckungsrichtung. Bezüglich der Ventilsteuerstange ist vorgesehen, dass diese eine Länge in Ventilerstreckungsrichtung aufweist, entlang derer sie vom Ventilkanal durchsetzt ist, die mindestens vier Mal so groß ist wie der mittlere Radius der Ventilsteuerstange. Vorzugsweise und zumeist ist die Länge der Ventilsteuerstange, entlang derer sie vom Ventilkanal durchsetzt ist, um einen größeren Faktor größer als der Radius der Ventilsteuerstange, vorzugsweise mindestens um Faktor 10.

Das genannte Verhältnis zwischen Radius und Durchmesser der Ventilsteuerstange einerseits und deren Länge andererseits führt in der Praxis zu Schwierigkeiten. So wurde festgestellt, dass Beschichtungsmaterial, das in den engen Spalt zwischen Innenumfang der Ventilbohrung und Außenumfangsteilflächen der Ventilsteuerstange gelangt, mit zunehmender Betriebsdauer die zum Verstellen des Schlitzventils erforderlichen Momente stark ansteigen lässt.

Dies ist dadurch bedingt, dass viele Beschichtungsmaterialen und insbesondere die im Zusammenhang mit der Batterieherstellung verwendeten Beschichtungsmaterialen dazu neigen, ihre Viskosität bei hoher Scherbelastung zu erhöhen. Je länger Reste des Beschichtungsmaterials zwischen der inneren Umfangsfläche der Ventilbohrung und den Auβenumfangsteilflächen verbleiben und je schmaler der Spalt zwischen der inneren Umfangsfläche und den Außenumfangsteilflächen ist, desto größer wird die Viskosität des Beschichtungsmaterials. In der Praxis können die an gattungsgemäßen Schlitzventilen vorgesehenen elektrischen Aktoren zum Schalten des Schlitzventils nach einer bestimmten Betriebsdauer keinen zuverlässigen Ventilschaltvorgang mehr bewirken, so dass die Verwendung der Beschichtungsanlage unterbrochen werden muss und die Ventilbohrung gereinigt werden muss.

### Aufgabe und Lösung

Aufgabe der Erfindung ist es, ein schaltbares Schlitzventil gattungsgemäßer Art dahingehend weiterzubilden, dass dieses über einen längeren Zeitraum wartungsfrei funktioniert.

Erfindungsgemäß wird dies dadurch erzielt, dass an den Außenumfangsteilflächen Vertiefungsbereiche vorgesehen sind, im Bereich derer die jeweilige Außenumfangsteilfläche nicht an der inneren Umfangsfläche der Ventilbohrung anliegt. Der Abstand zwischen dem Grund der Vertiefungsbereich und der inneren Umfangsfläche der Ventilbohrung liegt hier bei mindestens 0,5 mm.

Ein erfindungsgemäßes Schlitzventil weist die oben beschriebenen Merkmale gattungsgemäßer Schlitzventile auf. Bei dem Ventilgrundkörper handelt es sich vorzugsweise um einen metallischen Grundkörper, in den die Ventilbohrung insbesondere mit spanender Bearbeitung eingebracht ist. Bei der Ventilbohrung selbst handelt es sich um eine rotationssymmetrische und vorzugsweise zylindrische Ausnehmung, deren Länge mindestens vier Mal so groß wie der mittlere Radius ist. Die Ventilbohrung muss nicht zwingend eine zylindrische Form aufweisen, sondern kann beispielsweise auch konisch sein. In die Ventilbohrung mündet der Zufuhrkanal, und aus der Ventilbohrung geht der Düsenkanal ab, wobei beide Kanäle durch schlitzartige Öffnungen, die sich primär in Ventilerstreckungsrichtung erstrecken, mit der Ventilbohrung verbunden sind. Die absolute Länge der Ventilbohrung sowie die im Wesentlichen identische Breite des Zufuhrkanals und des Düsenkanals im Bereich der Umfangsfläche der Ventilbohrung sowie des Ventilkanals betragen mindestens 30 mm, vorzugsweise mindestens 100 mm. Je nach Anwendungszweck kann die Länge der Bohrung bzw. die Breite der jeweiligen Kanäle bis zu 2.000 mm und mehr betragen. Der mittlere Durchmesser der Ventilbohrung, insbesondere der Durchmesser der zylindrischen Ventilbohrung, ist vorzugsweise < 30 mm. Die Breite der Einmündung des Zufuhrkanals und des Ausgangs in den Düsenkanal übersteigt beträgt vorzugsweise mindestens dem Vierfachen der Höhe der Einmündung bzw. des Ausgangs.

Die Außenumfangsteilflächen im Sinne der Erfindung sind die beiden Teilflächen, die sich in Umfangsrichtung und entgegen der Umfangsrichtung vom Kanaleinlass zum Kanalauslass des Ventilkanals erstrecken. Die Breite der Außenumfangsteilflächen im Sinne der Erfindung entspricht der maximalen Breite des Ventilkanals in Ventilerstreckungsrichtung.

Während bei bekannten Schlitzventilen die beiden Außenumfangsteilflächen vollständig auf einer gemeinsamen gedachten Zylinderfläche liegen und somit jeweils als ganzes als Lagerfläche agieren, ist es bei der erfindungsgemäßen Gestaltung vorgesehen, dass im Bereich der Außenumfangsteilflächen zumindest ein Vertiefungsbereich, vorzugsweise mehrere Vertiefungsbereiche, vorgesehen sind. Während die Lagerflächen an den Außenumfangsteilflächen der Ventilsteuerstange derart an die Ventilbohrung angepasst sind, dass sie gegenüber deren rotationssymmetrischer Umfangsinnenfläche eine Beabstandung von weniger als 100 µm aufweisen, ist der Abstand in den Vertiefungsbereichen größer. Als Vertiefungsbereich im Sinne der Erfindung wird ein Bereich verstanden, bei dem der Abstand mindestens 0,5 mm beträgt. Ein solcher Abstand reicht aus, um den Effekt der Viskositätserhöhung bei den üblicherweise mit Schlitzventilen ausgetragenen Beschichtungsmaterialien signifikant zu senken.

Die Außenumfangsteilflächen der Ventilsteuerstange eines erfindungsgemäßen Schlitzventils unterteilen sich somit in Lagerflächen und Vertiefungsbereiche. Um in besonders gutem Maße die Leichtgängigkeit der Ventilsteuerstange zu gewährleisten, hat es sich als vorteilhaft herausgestellt, wenn der Anteil der Vertiefungsbereiche an den Außenumfangsteilflächen der Ventilsteuerstange mindestens 20% beträgt. Vorzugsweise liegt dieser Anteil noch höher, insbesondere bei mindestens 50%, insbesondere vorzugsweise bei mindestens 80%.

Die Lagerflächen und die Vertiefungsbereiche können auf viele verschiedene Arten verteilt sein. Grundsätzlich kommt es zur Erzielung des vorteilhaften Effektes nicht auf eine bestimmte Anordnung der Lagerflächen an.

Es hat sich jedoch als vorteilhaft herausgestellt, wenn an den Außenumfangsteilflächen jeweils mindestens ein Lagerringabschnitt vorgesehen ist, der sich in Umfangsrichtung zwischen dem Kanaleinlass und dem Kanalauslass des Ventilkanals erstreckt. Insbesondere von Vorteil ist es, wenn an den Außenumfangsteilflächen jeweils mindestens zwei Lagerringabschnitte vorgesehen sind, die voneinander in Ventilerstreckungsrichtung beabstandet sind und gemeinsam einen zwischen ihnen angeordneten Vertiefungsbereich in Axialrichtung einschließen. Dabei sind die Lagerringabschnitte an der ersten und an der zweiten Außenumfangsteilfläche vorzugsweise bezogen auf die Ventilerstreckungsrichtung auf gleicher Höhe angeordnet, so dass sie eine zumindest nahezu umlaufende Lagerfläche bilden. Eine solche nahezu umlaufende Lagerfläche, die jedoch gegebenenfalls durch den Vertiefungsbereichen zugehörige Nuten unterbrochen sein kann, trägt zu einer hohen Stabilität der Ventilsteuerstange in der Ventilbohrung bei.

Besonders von Vorteil ist es, wenn an der Ventilsteuerstange umlaufende Lagerringe vorgesehen sind, deren Außenfläche eine umlaufende Lagerfläche bildet, wobei diese Lagerringe den Kanaleinlass und den Kanalauslass überspannen. Bei einer solchen Gestaltung ist somit eine umlaufende Lagerfläche vorgesehen, die selbst im Bereich des Kanaleinlasses und des Kanalauslasses nicht unterbrochen ist und stattdessen ihrerseits den schlitzförmigen Kanaleinlass sowie den schlitzförmigen Kanalauslass unterbricht. Eine solche umlaufende Lagerfläche vermindert wirksam die Menge an Beschichtungsmaterial, die im Bereich dieser Lagerfläche zwischen die Lagerfläche und die innere Umfangsfläche der Ventilbohrung gelangt.

Weiterhin von Vorteil ist es, wenn die Ventilsteuerstange über mindestens zwei parallel zur Ventilerstreckungsrichtung erstreckte und der Lagerfläche zugehörige Lagerstege beidseitig des Einlasskanals und/oder beidseitig des Auslasskanals verfügt. Diese Lagerstege unterbrechen gemeinsam mit der inneren Umfangsfläche der Ventilbohrung in der Schließstellung der Ventilsteuerstange einen Pfad vom Zufuhrkanal zum Düsenkanal am Ventilkanal vorbei. Vorzugsweise sind diese Lagerstege unmittelbar benachbart zum Kanaleinlass und/oder dem Kanalauslass vorgesehen. Zwischen den Lagerstegen des Kanaleinlasses und des Kanalauslasses erstreckt sich vorzugsweise bezogen auf die Umfangsrichtung ein Vertiefungsbereich.

Zwar ist durch die erfindungsgemäße Gestaltung mit den Vertiefungsbereichen die Problematik eines großflächigen und schmalen Lagerspaltes bereits deutlich reduziert, sodass die Neigung der Ventilsteuerstange zum Festklemmen ebenfalls deutlich reduziert ist. Dennoch kann es von Vorteil sein, zur zusätzlichen Reduzierung der Neigung zum Festklemmen in der inneren Umfangsfläche der Ventilbohrung einen Aufnahmeraum zur Aufnahme von Beschichtungsmaterial aufzunehmen. Dieser Aufnahmeraum kann sich vorzugsweise über die gesamte Länge oder nahezu die gesamte Länge (> 80 %) der Ventilbohrung in Form einer in Ventilerstreckungsrichtung ausgerichteten Nut erstrecken. Es können jedoch auch mehrere Aufnahmeräume vorgesehen sein, die miteinander nicht in unmittelbarer Verbindung stehen. Diese Aufnahmeraum bzw. diese Aufnahmeräume gestatten die Aufnahme von Beschichtungsmaterial, welches aufgrund seiner vorher bestehenden Anordnung im Lagerspalt stark scherbelastet wurde und daher eine hohe Viskosität erreicht hat. Insbesondere von Vorteil ist es, wenn im Bereich der bereits genannten Lagerringe ein solcher Aufnahmeraum vorgesehen ist.

Zur Herstellung einer Ventilsteuerstange eines erfindungsgemäßen schaltbaren Schlitzventils bietet es sich vor allen Dingen an, diese Ventilsteuerstange dahingehend einstückig zu fertigen, dass alle Lagerflächen und die den Ventilkanal definierenden Wandungen einstückig miteinander verbunden sind. Insbesondere bietet es sich an, ausgehend von einem zylindrischen Rohling den schlitzförmigen Ventilkanal einzubringen und an der Außenseite dieses Rohlings Material insbesondere durch spanende Bearbeitung abzunehmen, um hierdurch die Vertiefungsbereiche zu schaffen.

Bei alternativen Gestaltungen kann es jedoch auch vorgesehen sein, die umlaufenden Lagerringe als separate Bauteile auszubilden, die auf ein gemeinsames, den Ventilkanal definierendes Bauteil aufgesetzt werden, insbesondere aufgeschrumpft werden oder mit diesem anderweitig formoder reibschlüssig gekoppelt werden.

Die Erfindung betrifft weiterhin auch eine Beschichtungsanlage zum Beschichten von Oberflächen in einem kontinuierlichen Verfahren mit einem pastösen Beschichtungsmaterial, wobei diese Beschichtungsanlage eine Zufuhreinrichtung zur Zuführung des Beschichtungsmaterials durch einen Zufuhrkanal, ein sich an den Zufuhrkanal anschließendes schaltbares Schlitzventil, einen sich an das Schlitzventil anschließenden Düsenkanal und eine sich an den Düsenkanal anschließende Schlitzdüse umfasst. Dabei ist das Schlitzventil in der oben beschriebenen Art ausgestaltet. Bei einer solchen erfindungsgemäßen Beschichtungsanlage umfasst die Zufuhreinrichtung vorzugsweise einen Pastenspeicher, in dem eine zur Batterieherstellung geeignetes Beschichtungsmaterial vorgehalten wird, also insbesondere ein Beschichtungsmaterial mit elektrochemisch aktiven Partikeln, die zur Herstellung einer Batterieelektrode dienen können.

Die Erfindung betrifft weiterhin auch ein Verfahren zur Beschichtung einer Oberfläche, bei dem die beschriebene Beschichtungsanlage Verwendung findet. Es handelt sich vorzugsweise um ein Verfahren zur Abgabe eines eine Batterieelektrode bildenden Beschichtungsmaterials.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels zweier Varianten hierzu, die anhand der Figuren erläutert sind. Dabei zeigen:
- Fig. 1: eine erfindungsgemäße Beschichtungsanlage,
- Fig. 2: die Ventilsteuerstange einer Beschichtungsanlage nach Fig. 1 und,
- Fig. 3a bis 3c: einen Schnitt durch ein erfindungsgemäßes Schlitzventils am Beispiel der Ausführungsform der Fig. 1 und 2 sowie zweier Alternativen hierzu.

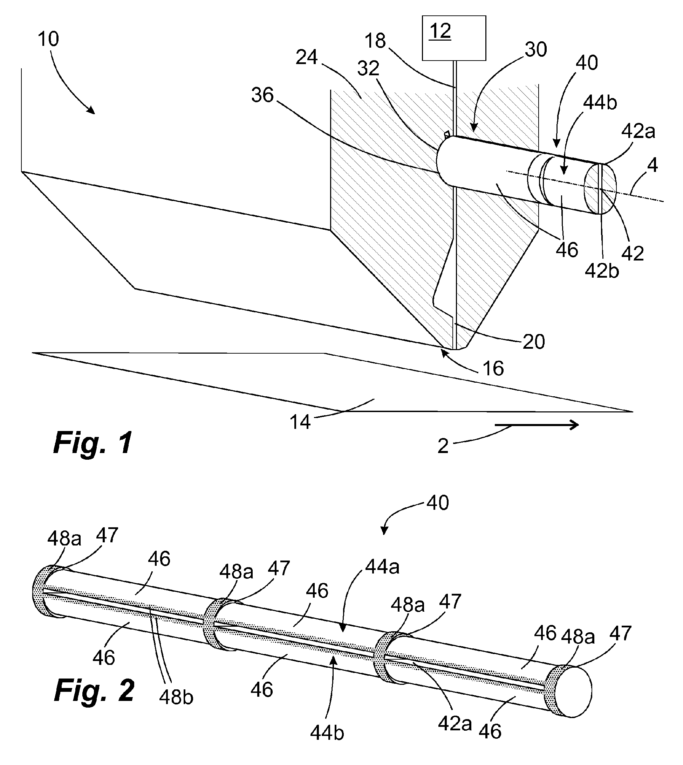

Fig. 1 zeigt eine erfindungsgemäße Beschichtungsanlage 10. Diese Beschichtungsanlage dient dem Zweck, ein Beschichtungsmaterial aus einem Pastenreservoir 12 auf einem Substrat 14 aufzutragen, welches während des Beschichtungsvorgangs kontinuierlich in Richtung des Pfeils 2 bewegt wird. Zu diesem Zweck ist eine schlitzförmige Düse 16 vorgesehen, durch die hindurch das Beschichtungsmaterial auf das Substrat 14 in Form eines breiten Beschichtungsfilms aufgebracht werden kann. Zwischen dem Pastenreservoir 12 und der Schlitzdüse 16 ist ein Schlitzventil 30 vorgesehen, welches dem Zweck dient, die Zufuhr von Beschichtungsmaterial zur Schlitzdüse 16 im Wechsel zuzulassen und zu unterbrechen.

Das Schlitzventil 30 verfügt über eine Ventilbohrung 32, die in einen Grundkörper 24 eingebracht ist und die vorliegend als zylindrische Bohrung ausgebildet ist. In diese Bohrung mündet ein Zufuhrkanal 18, der unter Druck stehendes Beschichtungsmaterial aus dem Pastenreservoir 12 dem Schlitzventil 30 zuführt. Auf der gegenüberliegenden Seite der Ventilbohrung 32 ist die Ventilbohrung 32 durch einen schlitzförmigen Ausgang mit einem zur Schlitzdüse 16 führenden Düsenkanal 20 verbunden.

In die sich in Ventilerstreckungsrichtung 4 erstreckende Ventilbohrung ist eine Ventilsteuerstange 40 eingesetzt, die um eine in Ventilerstreckungsrichtung 4 ausgerichtete Drehachse 4 drehbeweglich ist. Abhängig von der Drehstellung der Ventilsteuerstange 40 innerhalb der Ventilbohrung 32 wird der Zustrom von Beschichtungsmaterial zur Schlitzdüse 16 gestattet bzw. unterbrochen.

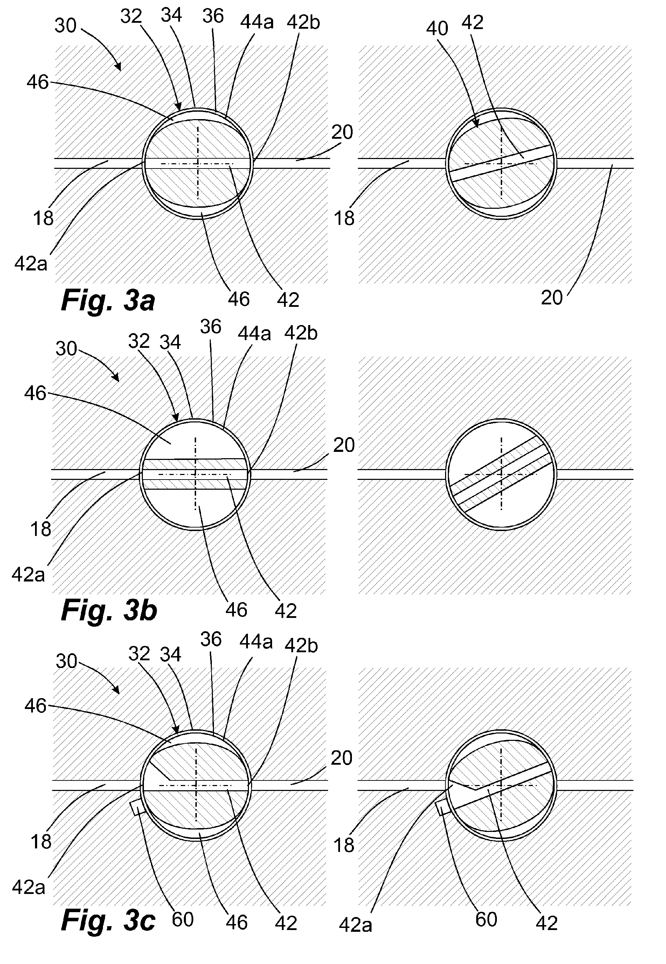

Die Fig. 3a zeigt auf der rechten Seite den Schließzustand. In diesem Schließzustand fluchtet ein Ventilkanal 42, der sich innerhalb der Ventilsteuerstange 40 von einem Kanaleinlass 42a bis zu einem Kanalauslass 42b erstreckt, nicht mit dem Zufuhrkanal 18 sowie dem Düsenkanal 20. Aus dem Zufuhrkanal 18 zugeführtes Beschichtungsmaterial kann daher nicht in den Düsenkanal 20 gelangen. Der Austrag des Beschichtungsmaterials ist unterbrochen.

In der Öffnungsstellung der Fig. 3a, linke Seite, fluchtet der Ventilkanal 42 jedoch mit dem Zufuhrkanal 18 und dem Düsenkanal 20, so dass der Austrag von Beschichtungsmaterial möglich ist.

Bei bekannten gattungsgemäßen Schlitzventilen wurde als Nachteil festgestellt, dass es kaum verhindert werden kann, dass Beschichtungsmaterial in den engen Lagerspalt 36 zwischen einer inneren Umfangsfläche 34 der Ventilbohrung 32 und einer kreiszylindrischen Lagerfläche der Ventilsteuerstange gelangen kann. Dieses in den Lagerspalt gelangte Beschichtungsmaterial wird dort stark auf Scherung beansprucht und kann daher je nach Typ des Materials eine deutliche Erhöhung der Viskosität erfahren, die zum Festklemmen der Ventilsteuerstange 40 führen kann.

Um diesem Problem Herr zu werden, ist bei der dargestellten erfindungsgemäßen Ausgestaltung vorgesehen, dass die beiden Lagerflächen, also jene Flächen, die sich im Uhrzeigersinn und gegen den Uhrzeigersinn vom Kanaleinlass 42a zum Kanalauslass 42b erstrecken, Vertiefungen 46 vorgesehen sind, die zu einer deutlichen Verminderung der Scherbeanspruchung des Beschichtungsmaterials führen.

Fig. 2 zeigt die Ventilsteuerstange 40. Zu erkennen ist hier der zum Zwecke der Erhöhung der Torsionssteifigkeit mehrfach unterbrochene Ventilkanal 42 und dessen Kanaleinlass 42a. Der Kanalauslass 42b ist auf der gegenüberliegenden Seite vorgesehen und in der Darstellung der Fig. 2 nicht zu erkennen. Die sich im Uhrzeigersinn bzw. gegen den Uhrzeigersinn vom Kanaleinlass 42a zum Kanalauslass 42b erstreckenden Außenflächen 44a, 44b der Ventilsteuerstange werden als Außenumfangsteilflächen 44a, 44b bezeichnet. Wie der Fig. 2 gut zu entnehmen ist, sind diese Außenumfangsteilflächen 44a, 44b mit Vertiefungsbereichen 46 versehen, also mit Bereichen, in denen die Außenumfangsteilflächen 44a, 44b gegenüber einer Form mit kreiszylindrischem Querschnitt zurückgesetzt sind. Die an die Ventilbohrung 32 angepassten Lagerflächen 48a, 48b sind in der Fig. 2 durch eine gepunktete Markierung gekennzeichnet. Es handelt sich um umlaufende Lagerflächen 48a sowie um dem Kanaleinlass bzw. dem Kanalauslass benachbarte Lagerstege 48b. Die Vertiefungsbereiche 46 sind jeweils durch solche Lagerflächen 48a im Bereich von Lagerringen 47 und Lagerstege 48b gegenüber dem Kanaleinlass 42a bzw. dem Kanalauslass 42b isoliert.

Durch die beschriebene Gestaltung, bei der über 90% der Außenumfangsteilflächen 44a, 44b eine vergrößerte Beabstandung gegenüber der inneren Umfangsfläche 34 der Ventilbohrung 32 aufweisen, wird eine deutlich verringerte Neigung zur Schwergängigkeit an der Steuerstange 40 verursacht. Jene Bereiche des Lagerspaltes 36, in denen Beschichtungsmaterialreste die Schwergängigkeit verursachen können, sind deutlich reduziert und beschränken sich auf die Lagerflächen 48a an den Lagerringen 47 und die Lagerstege 48b. Dabei ist im Hinblick auf die Lagerringe 47 weiterhin von Vorteil, dass deren Lagerflächen 48a umlaufend geschlossen sind und sogar im Bereich des Kanaleinlasses 42a und des Kanalauslasses 42b diese überspannen. Somit kommt es im Bereich der Lagerflächen 48a in verringertem Maße zum Eindringen von Beschichtungsmaterial, welches die Schwergängigkeit erhöhen könnte. Die Lagerstege 48b wiederum sind ausreichend schmal, um wirksam zu verhindern, dass das immer gleiche Beschichtungsmaterial im Bereich der Lagerstege 48b wiederholt auf Scherung beansprucht wird und hierdurch hochviskos wird. Stattdessen wird bei jeder Stellbewegung der Ventilsteuerstange 40 das zuvor zwischen der inneren Umfangsfläche 34 der Ventilbohrung 32 und den Lagerstegen 48b vorhandene Beschichtungsmaterial entweder in den durch den Zufuhrkanal, den Ventilkanal 42 und den Düsenkanal 20 gebildeten Strömungspfad oder aber in den Bereich einer der Vertiefungen 46 gedrückt.

Das dargestellte und beschriebene schaltbare Schlitzventil 30 ist daher gut zur Aufrechterhaltung eines dauerhaften Betriebes der hiermit ausgerüsteten Beschichtungsanlage verwendbar.

Wie bereits genannt, zeigt die Fig. 3a einen Querschnitt durch das in den Fig. 1 und 2 dargestellte Schlitzventil 30 in der Schließstellung (rechts) und der Durchlassstellung (links). Hier ist zu erkennen, dass die Vertiefungen 46 den Lagerspalt 36 deutlich vergrößern und somit der Scherung des in den Vertiefungsbereichen 46 angeordneten Beschichtungsmaterials wirksam entgegenwirken. Fig. 3a ist auch zu entnehmen, dass die Außenkonturen der Querschnittsfläche im Bereich der Vertiefungsbereiche 46 etwa elliptisch ist, sich also vom maximalen Radius im Bereich des Kanaleinlasses 42a und des Kanalauslasses 42b kontinuierlich bis zum Minimum verjüngt. Dies ist fertigungstechnisch besonders vorteilhaft umsetzbar.

Grundsätzlich ist es entsprechend der Variante der Fig. 3b auch möglich, die Vertiefungen 46 nochmals deutlich zu vergrößern, so dass lediglich noch Wandungen beidseitig des Ventilkanals 42 verbleiben. Hierdurch wird jedoch die Torsionssteifigkeit der Ventilsteuerstange 40 geschwächt, so dass eine solche Gestaltung nur dann zweckmäßig ist, wenn die verwendeten Materialien oder eine vergleichsweise kurze Länge des Steuerventils in Ventilerstreckungsrichtung 4 noch einen ausreichend verwindungsarmen Stellbetrieb der Ventilsteuerstange 40 zulassen.

Bei der Ausgestaltung gemäß Fig. 3c ist folgende Besonderheit vorgesehen: Versetzt zum Zufuhrkanal 18 ist an der inneren Umfangsfläche 34 der Ventilbohrung 32 ein Aufnahmeraum 60 vorgesehen. Dieser Aufnahmeraum erstreckt sich vorzugsweise über die vollständige Breite des Zufuhrkanals 18, des Ventilkanals 42 und/oder des Düsenkanals 20. Er dient dem Zweck, Beschichtungsmaterial, welches insbesondere im Bereich der ringförmigen Lagerflächen 48a zwischen diese und die innere Umfangsfläche 34 der Ventilbohrung 32 gelangt ist, aufzunehmen. Sobald die in Fig. 3c auf der rechten Seite dargestellte Schließstellung des Ventils 30 gegeben ist, ist dieser Aufnahmeraum 60 durch den verbreiterten Kanaleinlass 42a kommunizierend mit dem Zufuhrkanal 18 und dem Ventilkanal 42 verbunden und wird hierdurch gespült. Besonders stark zuvor auf Scherung beanspruchtes Material wird hierdurch in den Ventilkanal 42 gespült und nach nochmaligem Öffnen des Schlitzventils 30 in den Düsenkanal 20 gedrückt.

## Patentansprüche

1. Schaltbares Schlitzventil (30) für eine Beschichtungsanlage (10) zur Steuerung der Abgabe eines pastösen Beschichtungsmaterials mit
- einer in einen Ventilgrundkörper (24) eingebrachten und in einer Ventilerstreckungsrichtung (4) ausgerichteten Ventilbohrung (32),
- einem im Bereich einer inneren Umfangsfläche (34) der Ventilbohrung (32) angeordneten und in die Ventilbohrung (32) einmündenden Zufuhrkanal (18),
- einem im Bereich der inneren Umfangsfläche (34) der Ventilbohrung (32) angeordneten und aus der Ventilbohrung (32) herausführenden Düsenkanal (20) und
- einer in der Ventilbohrung (32) angeordneten Ventilsteuerstange (40), die um eine in Ventilerstreckungsrichtung (4) erstreckte drehbare Drehachse (4) drehbar in der Ventilbohrung (32) gelagert ist und von einem Ventilkanal (42) durchsetzt ist, der über einen schlitzförmigen Kanaleinlass (42a) und einen schlitzförmigen Kanalauslass (42b) verfügt,
wobei
- die Ventilsteuerstange (40) in der Ventilbohrung (32) zwischen einer Durchlassstellung und einer Schließstellung drehbar ist, wobei in der Durchlassstellung der Zufuhrkanal (18) und der Düsenkanal (20) über den Ventilkanal (42) kommunizierend verbunden sind und wobei in der Schließstellung der Düsenkanal (20) vom Zufuhrkanal (18) durch die Ventilsteuerstange (40) isoliert ist, und
- an der Ventilsteuerstange (40) im Bereich zweier Außenumfangsteilflächen (44a, 44b) zwischen dem schlitzförmigen Kanaleinlass und dem schlitzförmigen Kanalauslass Lagerflächen (48a, 48b) vorgesehen sind, die zum Zwecke der Lagerung der Ventilsteuerstange an der inneren Umfangsfläche (34) der Ventilbohrung (32) anliegen,
**dadurch gekennzeichnet, dass**
- an den Außenumfangsteilflächen (44a, 44b) Vertiefungsbereiche (46) vorgesehen sind, im Bereich derer die jeweilige Außenumfangsteilfläche (44a, 44b) nicht an der inneren Umfangsfläche (34) der Ventilbohrung (32) anliegt.

2. Schaltbares Schlitzventil (30) nach Anspruch 1,
**dadurch gekennzeichnet, dass**
die Vertiefungsbereiche (46) an den Außenumfangsteilflächen (44a, 44b) der Ventilsteuerstange (40) mindestens 20% der Fläche der gesamten Außenumfangsteilflächen (44a, 44b) bilden.

3. Schaltbares Schlitzventil (30) nach Anspruch 1 oder 2,
**dadurch gekennzeichnet, dass**
an den Außenumfangsteilflächen (44a, 44b) mindestens zwei Lagerringabschnitte (47) vorgesehen sind, die sich in Umfangsrichtung zwischen dem Kanaleinlass (42a) und dem Kanalauslass (42b) erstrecken und die voneinander durch einen Vertiefungsbereich (46) unterbrochen sind.

4. Schaltbares Schlitzventil (30) nach Anspruch 3,
**dadurch gekennzeichnet, dass**
umlaufende Lagerringe (47) vorgesehen sind, deren Außenfläche eine umlaufende Lagerfläche (48a) bildet, wobei diese Lagerringe (47) den Kanaleinlass (42a) und den Kanalauslass (42b) überspannen.

5. Schaltbares Schlitzventil (30) nach einem der vorstehenden Ansprüche,
**dadurch gekennzeichnet, dass**
die Steuerstange (40) über mindestens zwei parallel zur Ventilerstreckungsrichtung (4) erstreckte Lagerstege (48b) beidseitig des Einlasskanals (42a) und/oder beidseitig des Auslasskanals (42b) verfügt, die in der Schließstellung der Ventilsteuerstange (40) einen Pfad vom Zufuhrkanal (18) zum Düsenkanal (20) am Ventilkanal (42) vorbei gemeinsam mit der inneren Umfangsfläche (34) der Ventilbohrung unterbrechen.

6. Schaltbares Schlitzventil (30) nach einem der vorstehenden Ansprüche,
**dadurch gekennzeichnet, dass**
zur Aufnahme von Beschichtungsmaterial, welches zwischen Lagerflächen (48a, 48b) und inneren Umfangsfläche (34) der Ventilbohrung (32) gelangt ist, in die innere Umfangsfläche (34) der Ventilbohrung (30) mindestens ein Aufnahmeraum (60) eingebracht ist.

7. Schaltbares Schlitzventil (30) nach einem der vorstehenden Ansprüche,
**dadurch gekennzeichnet, dass**
alle Lagerflächen (48a, 48b) der Ventilsteuerstange (40) und den Ventilkanal (42) definierende Wandungen einstückig miteinander ausgebildet sind.

8. Beschichtungsanlage (10) zum Beschichten von Oberflächen (14) in einem kontinuierlichen Verfahren mit einem pastösen Beschichtungsmaterial, umfassend
- eine Zufuhreinrichtung (12, 18) zur Zuführung des Beschichtungsmaterials durch einen Zufuhrkanal (18),
- ein sich an den Zufuhrkanal (18) anschließendes schaltbares Schlitzventil (30),
- ein sich an das Schlitzventil (30) anschließenden Düsenkanal (20) und
- eine sich an den Düsenkanal (20) anschließende Schlitzdüse (16) zur Ausbringung des Beschichtungsmaterials auf die damit zu beschichtende Oberfläche (14),
**dadurch gekennzeichnet, dass**
- das Schlitzventil (30) nach einem der vorstehenden Ansprüche ausgebildet ist.

9. Beschichtungsanlage nach Anspruch 8,
**dadurch gekennzeichnet, dass**
die Zufuhreinrichtung (12, 18) einen Pastenspeicher (12) umfasst, in dem eine Beschichtungsmaterial zur Herstellung von Batterien vorgehalten wird.

10. Verfahren zur Ausbringung eines Beschichtungsmaterials auf einer Oberfläche,
**dadurch gekennzeichnet, dass**
das Beschichtungsmaterial mittels einer Beschichtungsanlage (10) nach einem der Ansprüche 8 oder 9 ausgebracht wird.

## Claims

1. Switchable slot valve (30) for a coating plant (10) for controlling the delivery of a pasty coating material, having
- a valve bore (32) which is incorporated in a valve main body (24) and is aligned in a valve extent direction (4),
- a supply duct (18) which is disposed in the region of an inner circumferential face (34) of the valve bore (32) and opens into the valve bore (32),
- a nozzle duct (20) which is disposed in the region of the inner circumferential face (34) of the valve bore (32) and leads out of the valve bore (32), and
- a valve control rod (40) being disposed in the valve bore (32), which is mounted so as to be rotatable in the valve bore (32) about a rotatable rotation axis (4) extending in a valve extent direction (4), and which is penetrated by a valve duct (42) having a slot-shaped duct inlet (42a) and a slot-shaped duct outlet (42b),
wherein
- the valve control rod (40) in the valve bore (32) is rotatable between a throughput position and a closed position, wherein in the throughput position the supply duct (18) and the nozzle duct (20) are interconnected so as to communicate via the valve duct (42), and wherein in the closed position the nozzle duct (20) is isolated from the supply duct (18) by the valve control rod (40), and
- bearing faces (48a, 48b) which, for the purpose of bearing the valve control rod, bear on the inner circumferential face (34) of the valve bore (32) are provided on the valve control rod (40), in the region of two outer circumferential part-faces (44a, 44b), between the slot-shaped duct inlet and the slot-shaped duct outlet,
**characterized in that**
- depression regions (46), in the region of which the respective outer circumferential part-face (44a, 44b) does not bear on the inner circumferential face (34) of the valve bore (32), are provided on the outer circumferential part-faces (44a, 44b).

2. Switchable slot valve (30) according to Claim 1, **characterized in that**
the depression regions (46) on the outer circumferential part-faces (44a, 44b) of the valve control rod (40) form at least 20% of the area of the total outer circumferential part-faces (44a, 44b).

3. Switchable slot valve (30) according to Claim 1 or 2,
**characterized in that**
at least two bearing ring portions (47) which extend in the circumferential direction between the duct inlet (42a) and the duct outlet (42b) and which are mutually interrupted by a depression region (46) are provided on the outer circumferential part-faces (44a, 44b).

4. Switchable slot valve (30) according to Claim 3, **characterized in that**
encircling bearing rings (47), the outer face of which forms an encircling bearing face (48a), are provided, wherein these bearing rings (47) span the duct inlet (42a) and the duct outlet (42b).

5. Switchable slot valve (30) according to one of the preceding claims,
**characterized in that**
the control rod (40) disposes of at least two bearing webs (48b) on both sides of the inlet duct (42a) and/or on both sides of the outlet duct (42b), which bearing webs extend so as to be parallel with the valve extent direction (4) and which in the closed position of the valve control rod (40) in collaboration with the inner circumferential face (34) of the valve bore interrupt a path from the supply duct (18) to the nozzle duct (20), bypassing the valve duct (42).

6. Switchable slot valve (30) according to one of the preceding claims,
**characterized in that**
for receiving coating material which has made its way between the bearing faces (48a, 48b) and the inner circumferential face (34) of the valve bore (32), at least one receiving space (60) is incorporated in the inner circumferential face (34) of the valve bore (30).

7. Switchable slot valve (30) according to one of the preceding claims,
**characterized in that**
all bearing faces (48a, 48b) of the valve control rod (40) and walls defining the valve duct (42) are configured so as to be integral with one another.

8. Coating plant (10) for coating surfaces (14) with a pasty coating material in a continuous method, comprising
- a supply unit (12, 18) for supplying the coating material by way of a supply duct (18),
- a switchable slot valve (30) which is downstream of the supply duct (18),
- a nozzle duct (20) which is downstream of the slot valve (30), and
- a slot nozzle (16) which is downstream of the nozzle duct (20), for deploying the coating material onto the surface (14) to be coated therewith,
**characterized in that**
- the slot valve (30) is configured according to one of the preceding claims.

9. Coating plant according to Claim 8, **characterized in that**
the supply unit (12, 18) comprises a paste reservoir (12) in which a coating material for the manufacture of batteries is held ready.

10. Method for deploying a coating material on a surface,
**characterized in that**
the coating material is deployed by means of a coating plant (10) according to one of Claims 8 or 9.

## Revendications

1. Soupape à fente commutable (30) pour une installation de revêtement (10) pour commander la distribution d'un matériau de revêtement pâteux, comprenant :
- un alésage de soupape (32) monté dans un corps de base de soupape (24) et orienté dans une direction d'étendue de la soupape (4),
- un canal d'alimentation (18) disposé dans la région d'une surface périphérique intérieure (34) de l'alésage de soupape (32) et débouchant dans l'alésage de soupape (32),
- un canal de buse (20) disposé dans la région de la surface périphérique intérieure (34) de l'alésage de soupape (32) et sortant hors de l'alésage de soupape (32) et
- une tige de commande de soupape (40) disposée dans l'alésage de soupape (32), qui est supportée de manière à pouvoir tourner dans l'alésage de soupape (32) autour d'un axe de rotation (4) rotatif s'étendant dans la direction d'étendue de la soupape (4) et qui est traversée par un canal de soupape (42) qui dispose d'une entrée de canal en forme de fente (42a) et d'une sortie de canal en forme de fente (42b),
- la tige de commande de soupape (40) pouvant tourner dans l'alésage de soupape (32) entre une position de passage et une position de fermeture, le canal d'alimentation (18) et le canal de buse (20) étant connectés de manière à communiquer par le biais du canal de soupape (42) dans la position de passage et le canal de buse (20) étant isolé du canal d'alimentation (18) par la tige de commande de soupape (40) dans la position de fermeture, et
- des surfaces de palier (48a, 48b) étant prévues au niveau de la tige de commande de soupape (40) dans la région de deux surfaces partielles périphériques extérieures (44a, 44b) entre l'entrée de canal en forme de fente et la sortie de canal en forme de fente, lesquelles surfaces de palier s'appliquent contre la surface périphérique intérieure (34) de l'alésage de soupape (32) en vue de supporter la tige de commande de soupape,
**caractérisée en ce que**
- des régions de renfoncement (46) sont prévues au niveau des surfaces partielles périphériques extérieures (44a, 44b), dans la région desquelles la surface partielle périphérique extérieure respective (44a, 44b) ne s'applique pas contre la surface périphérique intérieure (34) de l'alésage de soupape (32).

2. Soupape à fente commutable (30) selon la revendication 1,
**caractérisée en ce que**
les régions de renfoncement (46) au niveau des surfaces partielles périphériques extérieures (44a, 44b) de la tige de commande de soupape (40) constituent au moins 20 % de la surface des surfaces partielles périphériques extérieures totales (44a, 44b).

3. Soupape à fente commutable (30) selon la revendication 1 ou 2,
**caractérisée en ce que**
au moins deux portions de bague de palier (47) sont prévues au niveau des surfaces partielles périphériques extérieures (44a, 44b), lesquelles s'étendent dans la direction périphérique entre l'entrée de canal (42a) et la sortie de canal (42b) et lesquelles sont séparées l'une de l'autre par une région de renfoncement (46).

4. Soupape à fente commutable (30) selon la revendication 3,
**caractérisée en ce que**
des bagues de palier périphériques (47) sont prévues, dont la surface extérieure forme une surface de palier périphérique (48a), ces bagues de palier (47) s'étendant par-dessus l'entrée de canal (42a) et la sortie de canal (42b).

5. Soupape à fente commutable (30) selon l'une quelconque des revendications précédentes, **caractérisée en ce que**
la tige de commande (40) dispose d'au moins deux nervures de palier (48b) s'étendant parallèlement à la direction d'étendue de la soupape (4) de part et d'autre du canal d'entrée (42a) et/ou de part et d'autre du canal de sortie (42b), lesquelles, conjointement avec la surface périphérique intérieure (34) de l'alésage de soupape, dans la position de fermeture de la tige de commande de soupape (40), interrompent un chemin allant du canal d'alimentation (18) au canal de buse (20) devant le canal de soupape (42).

6. Soupape à fente commutable (30) selon l'une quelconque des revendications précédentes, **caractérisée en ce que**
pour recevoir du matériau de revêtement qui parvient entre les surfaces de palier (48a, 48b) et la surface périphérique intérieure (34) de l'alésage de soupape (32), au moins un espace de réception (60) est réalisé dans la surface périphérique intérieure (34) de l'alésage de soupape (30).

7. Soupape à fente commutable (30) selon l'une quelconque des revendications précédentes, **caractérisée en ce que**
toutes les surfaces de palier (48a, 48b) de la tige de commande de soupape (40) et des parois définissant le canal de soupape (42) sont réalisées d'une seule pièce les unes avec les autres.

8. Installation de revêtement (10) pour le revêtement de surfaces (14) dans un procédé continu avec un matériau de revêtement pâteux, comprenant :
- un dispositif d'alimentation (12, 18) pour alimenter le matériau de revêtement à travers un canal d'alimentation (18),
- une soupape à fente commutable (30) se raccordant au canal d'alimentation (18),
- un canal de buse (20) se raccordant à la soupape à fente (30) et
- une buse à fente (16) se raccordant au canal de buse (20) pour distribuer le matériau de revêtement sur la surface (14) devant être revêtue avec celui-ci,
**caractérisée en ce que**
- la soupape à fente (30) est réalisée selon l'une quelconque des revendications précédentes.

9. Installation de revêtement selon la revendication 8,
**caractérisée en ce que**
le dispositif d'alimentation (12, 18) comprend un dispositif de stockage de pâte (12) dans lequel est conservé un matériau de revêtement pour la fabrication de batteries.

10. Procédé de distribution d'un matériau de revêtement sur une surface,
**caractérisé en ce que**
le matériau de revêtement est distribué au moyen d'une installation de revêtement (10) selon l'une quelconque des revendications 8 ou 9.
